# EUROPEAN PATENT APPLICATION

(11) **EP 3 459 630 A1**
(43) Date of publication of application: **27.03.2019**
(21) Application number: 17192378.2
(22) Date of filing: 21.09.2017
(51) Int. Cl.: B01J 20/20, B01J 20/28, B01J 20/30, B01J 20/32, A62B 17/00, A62B 18/02, A62B 23/00, B01D 53/02, C04B 2/04, C04B 2/06

(54) **ABSORBENT FOR CBRN AGENT, TOXIC AGENT ADSORPTION FILTER USING THE ABSORBENT, TOXIC AGENT PROTECTIVE SUIT USING THE ADSORPTION FILTER, AND METHOD OF MANUFACTURING THE ADSORPTION FILTER**

(71) Applicant: Sancheong Co. Ltd, Gyeonggi-do 449-823 (KR)
(72) Inventor: KIM, Jong Kee, 449-823 Gyeonggi-do (KR)
(74) Representative: Ter Meer Steinmeister & Partner

(57) **Abstract**

The present invention relates to an absorbent for CRBN agents, a textile using the absorbent, and a method of manufacturing the textile. The absorbent of the present invention includes: a matrix; a powder type activated carbon mixed in the matrix to sorb a toxic agent; a solvent mixed in the matrix mixed with the activated carbon; and a soluble particulate filler mixed in the matrix together with the solvent, composed of many particles bonding to particles of the powder type activated carbon, and providing holes formed by bubble-shaped cavities in the matrix by being extracted and removed when the matrix hardens. The present invention can provide holes on the outer sides of the particles of the activated carbon using the particulate filler.

## Description

### BACKGROUND OF THE INVENTION

### Field of the Invention

The present invention relates to absorbent for CBRN agent, a toxic agent adsorption filter using the absorbent, a toxic agent protective suit using the adsorption filter, and a method of manufacturing the adsorption filter. More particularly, the present invention relates to an absorbent for CRBN agents that has an improved absorptive ability for toxic agents because it has uniformly distributed activated carbons and that can be reused after washing because the activated carbon is not removed in washing, a toxic agent adsorption filter using the absorbent, a toxic agent protective suit using the adsorption filter, and a method of manufacturing the adsorption filter.

### Description of the Related Art

In general, as countries that develop and have weapons of mass destruction have increased, products that can protect a human body and equipment are required in modern warfare. Chemical weapons of the weapons of mass destruction can be produced at low costs, can be quickly manufactured in a large quantity through small-sized manufacturing facilities, can be relatively easily handled and maintained, and are considerably threatening weapons.

Accordingly, various items of protective equipment that can protect a human body, for example, a CBRN protective suit and a gas mask for CBRN (chemical, biological, radiological, or nuclear) defense are required. The CBRN protective suits can be largely classified into a breathable protective suit and a non-breathable protective suit on the basis of air permeability.

A non-breathable protective suit, which is protective clothing that prevents inflow/outflow of fluid, has an excellent protective ability against toxic agents, but has a critical defect that it is difficult to discharge vapor and heat from a human body.

On the other hand, the breathable protective suit, unlike the non-breathable protective suit, partly allows inflow/outflow of fluid and toxic agents that are considered to directly influence a human body, so a double structure composed of a textile including activated carbon that can filter toxic agents by adsorbing them and a textile having a disguise function and added on the textile has been used.

In relation to a breathable protective suit in the related art, there are "Fabric with improved flexibility of chemical protecting cloth" in Korean Patent No. 10-1041415, "Adsorption filter material" in Korean Patent No. 10-1146573, and a "Textiles for CRB (Chemical Biological and Radiological) protective clothing and CRB protective thereby" Korean Patent No. 10-1406311.

According to these technologies in the related art, the clothing is composed of an inner fabric that is coated with activated carbon through an adhesive and can adsorb toxic agents, and an outer fabric that is made by applying a thin latex rubber layer to a polyester-based fabric to protect the inner fabric and primarily blocks liquid-state and solid-state toxic agents, in order to protect a human body from fluid toxic agents composed of gases or liquids.

In particular, according to the technologies in the related art, sorbents formed in the shape of breathable beads having fine pores are disposed between the inner fabric and the outer fabric, thereby adsorbing and filtering toxic agents.

However, according to the technologies in the related art(related art1), since the sorbents have the shape of beads, gaps are formed between the beads, so toxic agents infiltrate through the gaps without being filtered.

Further, since the bead-shaped sorbents are disposed between the outer fabric and the inner fabric, only the tops and bottoms of the bead-shaped sorbents are attached to the outer fabric and the inner fabric, so the bead-shaped sorbents may be detached from the outer fabric and the inner fabric in washing the fabric. Accordingly, the ability to adsorb toxic agents may be considerably decreased when washing is repeated.

Further, since the sorbents are formed in the shape of beads, the manufacturing cost is too high increased because manufacturing is very difficult, and the weight is increased. Accordingly, as the weight is increased, activity of protective suits is deteriorated when they are used in the protective suits.

Therefore, a product employing powder-typed activated carbon rather than bead-shaped sorbents has been released to solve these problems in the market in Korea. According to this product(related art2), however, activated carbon powder is simply applied to a textile such as a nonwoven fabric and then pressed, so when a user wears the product and moves, a large amount of activated carbon comes off and some of the separated activated carbon is lost in washing, and thus it cannot be reused.

According to this product, since activated carbon is provided in a powder type, when the activated carbon is bonded to the textile by an adhesive, the activated carbon is embedded in the adhesive, so it is difficult to expect the normal adsorption function of the activated carbon. In particular, since the adhesive covers the textile, the air permeability of the fabric is removed, so the activated carbon is inevitably simply applied to the textile.

### Documents of Related Art

### [Patent Documents]

(Patent Document 1) KR B 10-1041415 (2011.06.08)
(Patent Document 2) KR B 10-1146573 (2012.05.09)
(Patent Document 3) KR B 10-1406311 (2014.06.03)

### SUMMARY OF THE INVENTION

The present invention has been made in an effort to solve the problems and an object of the present invention is to provide an absorbent for CBRN agents that has an improved absorptive ability for toxic agents such as CBRN agents or chemical substances that are harmful to a human body because it has uniformly distributed activated carbon, that keeps the activated carbon in washing, and has partial air permeability with excellent productivity, a toxic agent adsorption filter using the absorbent, a toxic agent protective suit using the adsorption filter, and a method of manufacturing the adsorption filter.

In particular, an object of the present invention is to provide an absorbent for CBRN agents that can form a sheet-shaped adsorption filter filtering toxic agents by sorbing them, a toxic agent adsorption filter using the absorbent, a toxic agent protective suit using the adsorption filter, and a method of manufacturing the adsorption filter.

In order to achieve the objects of the present invention, an absorbent for CRBN (chemical, biological, radiological, and nuclear) agents includes: powder type activated carbon for sorbing a toxic agent; a matrix made of a thermosetting and thermoplastic material that is mixed with the powder type activated carbon and solidifies from a liquid state; a solvent mixed in the matrix mixed with the powder type activated carbon; and a soluble particulate filler mixed in the matrix together with the solvent, composed of many particles bonding to particles of the powder type activated carbon, and providing holes formed by bubble-shaped cavities in the matrix by being extracted and removed when the matrix hardens.

The matrix may be mixed at 24 to 75 parts by weight for 100 parts by weight of the powder type activated carbon, the solvent may be mixed at 106 to 205 parts by weight for 100 parts by weight of the powder type activated carbon, and the soluble particulate filler may be mixed at 0.2 to 57 parts by weight for 100 parts by weight of the powder type activated carbon.

Alternatively, the absorbent may be composed of the matrix of 5 to 30wt% mixed with the activated carbon of 5 to 70wt%, a particulate filler of 0.1 to 20wt% mixed in the matrix, and a solvent that is the balance.

The matrix may be made of a material having at least any one of elasticity, hydrophilicity, chemical resistance, thermal resistance, and moisture resistance.

The solvent may be made of a material that is evaporated or, dried and dissipated by heating.

The particle size of the activated carbon may be 0.1*µ*m to 300*µ*m.

The absorbent may further include an additive added to the matrix mixed with the activated carbon to adjust fluidity of the matrix.

The additive may be mixed at 0.1 to 50 parts by weight for 100 parts by weight of the activated carbon.

A toxic agent adsorption filter of the present invention includes: a base layer; and a filter layer formed by the absorbent for CRBN agents and providing a thick adsorptive layer by being applied to at least one side of the base layer to sorb a toxic agent.

The filter layer may have holes having a size that makes the side of the baser layer waterproof and allows air to pass the filter layer.

A plurality of filter layers may be spaced on the base layer.

The filter layers are formed with predetermined gaps on both sides of the base layer to be alternate up and down on the both sides.

A method of manufacturing a toxic agent adsorption filter of the present invention includes: making a coating agent from the absorbent for CRBN agents of any one of claims 1 to 3; printing a filter layer, which provides an adsorptive layer, in a thick layer on a base layer by applying the coating agent on a first side of the base layer; forming the adsorptive layer in a sheet shape on the first side of the base layer by hardening the filter layer; and forming holes that are bubble-shaped cavities by extracting a particulate filler composed of many particles from the absorbent forming the filter layer.

The printing of the adsorptive layer may include: putting a screen on the base layer with a predetermined gap therebetween; applying the coating agent made from the absorbent to the screen; and transcribing the coating layer onto the base layer by pressing down the coating agent through the screen.

The printing of the adsorptive layer may include: applying a coating agent to a printing surface of a gravure printing plate; putting the gravure printing plate over the base layer; and transcribing the coating agent on the printing surface onto the base layer by pressing the gravure plate to the base layer.

The printing of the adsorptive layer may print the coating agent in a thick layer by applying the coating agent onto a side of the base layer.

The forming of the adsorptive layer may include: solidifying the filter layer printed on the base layer in a sheet type by heating the filter layer; and cooling the filter layer to a predetermined temperature.

The forming of holes may include: extracting the particulate filter from the filer layer using chemical reaction between the particulate filler and a reagent for extracting the particulate filler from the filter layer by bringing the filter layer in contact with the reagent; and removing the reagent from the filter layer.

The method may include: producing a coating agent using an absorbent for CBRN agents mainly containing a matrix mixed with powder type activated carbon for sorbing a toxic agent; forming projective spacers on a base layer on which the coating agent is applied; printing a filer layer made of the coating agent in a thick layer on the base layer by filling the gaps between the spacers with the coating agent; and forming a sheet-shaped adsorptive layer using the filter layer on the base layer.

The producing of a coating agent may include: mixing a solvent by putting the solvent into the matrix; putting in a soluble particulate filler that is composed of many particles, which are bonded to the particles of the powder type activated carbon, and provides holes formed by bubble-shaped cavities in the filter layer when being hardened and extracted from the filter layer; and mixing the matrix in which the solvent and the particulate filler are put, with the powder type activated carbon.

The producing of a coating agent may further include adding an additive for adjusting the fluidity of the matrix.

The forming of spacers may include: preparing a phase change material that is applied to the base layer to which the coating agent is applied, at a height corresponding to the thickness of the filter layer, and that solidifies from a liquid state; applying the phase change material at predetermined gaps on the base layer; and hardening the phase change material to form projective spacers on the base layer.

The preparing of a phase change material may prepare the coating agent, liquid urethane, epoxy, nylon, acryl, or colloid or paste type activated carbon.

The applying of the phase change material applies the phase change material at predetermined gaps on the base layer by applying the phase change material in the shape of dots or meshes.

The printing of a filter layer includes: putting a screen for passing the coating agent on the spacers; and filling the gaps of the spacers with the coating agent by pressing down the coating agent through the screen to form the filter layer on the base layer.

The filling of the gaps with the coating agent may include: applying the coating agent made of the absorbent onto the screen; and transcribing the coating agent for the filter layer to the gaps between the spacers on the base layer by pressing down the coating agent through the screen.

The printing of a filter layer may apply the coating agent in the gaps between the agents using a printer.

An adsorption filter of the present invention may be manufactured by the method and then used for manufacturing a toxic agent protective suit.

According to the present invention, since a matrix mixed with powder type activated carbon hardens in a sheet shape, the activated carbon is uniformly distributed, so the ability to absorbing a toxic agent is improved. The activated carbon is not removed in washing, so the textile of a toxic agent protective suit such as a contaminated chemical protective suit can be reused after washing. Even if the textile of a protective suit is wrinkled or washed, the absorbent for CBRN agents and the activated carbon are not removed from the textile of the protective suit, so even if the textile is used for the outer fabric or the inner fabric of a protective suit that is wrinkled when a user moves in the suit, the wearing sensation is improved by elasticity of the hardened matrix.

In particular, since when the soluble particulate filter composed of many particles is extracted from the matrix, fine holes formed by bubble-shaped cavities are left in the matrix, so a toxic agent can be guided to the particles of the activated carbon through the holes connected to the particles. Accordingly, it is possible to maximally prevent the surfaces of the particles of the activated carbon from being covered with the matrix, so it is possible to maximally and stably ensure the specific surface areas of the particles of the activated carbon.

Further, since the matrix is made of a material having elasticity, hydrophilicity, chemical resistance, thermal resistance, and moisture resistance, wearing sensation can be improved by the elasticity of the matrix, solubility can be ensured by the hydrophilicity, and chemical resistance and thermal resistance can be improved and waterproofing can also be improved by the chemical resistance and thermal resistance. To this end, eco-friendly aqueous urethane may be independently used for bonding to a fiber under a low-temperature hardening condition. Alternatively, of acryl or melanin resin, which has excellent moisture resistance, hardness, and formability or, epoxy, silicon, phenol, or polyamic acid, which have an adhesive property, strength, chemical resistance, and thermal resistance may be mixed, depending on additionally required properties

Further, fine pores are formed in the matrix and the filter layer formed in a sheet shape by the solvent that is evaporated, or dried and dissipated, whereby it is possible to supply a toxic agent to the particles of the activated carbon in the matrix, that is, the particles of the activated carbon in the filter layer through the holes, so the sorbing ability can be considerably improved.

Further, since the particle size of the activated carbon is 0.1*µ*m to 300*µ*m, the effective areas are increased, so the sorbing ability of the activated carbon can be improved.

Further, since the additive is added, it is possible to improve printability of the coating agent and it is also possible to improve properties such as distribution and stability.

Further, since the filter layer for absorbing a toxic agent is formed in a thick layer on the base layer, it is possible to easily manufacture an adsorption filter composed of the filter layer and the base layer in one sheet of textile. When the filter layers are formed with gaps on the base layer, the strength of the filter layers is partially decreased, so flexibility of the adsorption filter formed in a textile type can be further ensured. When the filter layer are alternately formed on both sides of the base layer, it is possible to ensure flexibility of the textile type adsorption filter and filter a toxic agent through both sides of the base layer.

Further, since the filter layer made of the coating agent is integrally formed with the base layer by printing and hardening the filter layer on the base layer, it is possible to easily manufacture a textile type adsorption filter. Since the filter layer is printed on the base layer by screen printing or gravure printing, the filter layer can be formed in a thin layer. Since the printed filter layer is hardened by heating, it is possible to stably form the filter later for a short time.

Further, since the particulate filler is extracted and removed by bringing the filter layer in contact with an agent that chemically reacts with the particulate filler, the particulate filler can be easily removed.

Further, the filter layer is printed after the projective spacers are formed on the base layer, the thickness of the filter layer can be easily increased. Since the spacers are formed using a phase change material, the spacers can be easily formed. Since the phase change material is applied in the shape of dots or meshes on the base layer, the spacers can be easily spaced and a coating agent can be easily filled in the gaps between the spacers.

Finally, when a toxic agent protective suit is manufactured using the adsorption filter described above, it is possible to purify a toxic agent through the particles of the activated carbon having the holes formed by the particulate filler, the activate carbon is not removed even in repeated washing, and wearing sensation is improved by the flexibility of the filter layer.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is a vertical cross-sectional view showing an adsorbent for CBRN agents and a textile according to an embodiment of the present invention;
FIGS. 2A and 2B are conceptual views showing the absorbent shown in FIG. 1;
FIG. 3 is a block diagram showing a manufacturing process of an adsorption filter for a toxic agent according to an embodiment of the present invention;
FIG. 4 is vertical cross-sectional view showing the base layer shown in FIG. 1;
FIG. 5 is a cross-sectional view showing a process of forming a filter layer on the base layer shown in FIG. 4;
FIGS. 6A and 6B are conceptual view showing an embodiment of the textile shown in FIG. 1;
FIG. 7 is a conceptual view showing other embodiments of the textile shown in FIG. 1;
FIG. 8 is a table showing conditions for screen printing that is applied to the manufacturing process shown in FIG. 3;
FIG. 9 is a table showing a test result on an adsorption filter manufactured by the manufacturing process shown in FIG. 3;

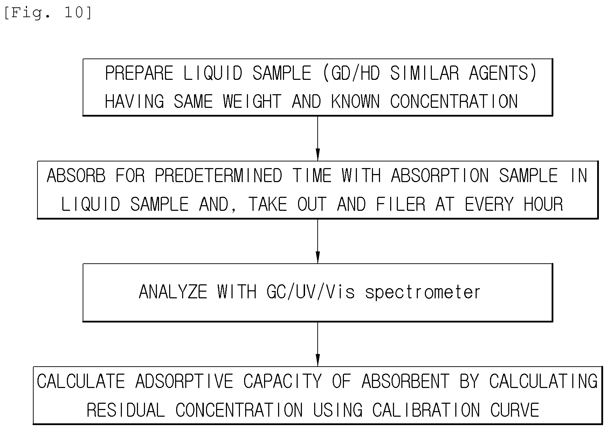

FIG. 10 is a flowchart showing a performance test evaluation method of the adsorption filter manufactured by the manufacturing process of FIG. 3;
FIG. 11 is a flowchart showing a process of washing the adsorption filter manufactured by the manufacturing process shown in FIG. 3;
FIG. 12 is a cross-sectional view showing an absorbent of the adsorption filter manufactured by the manufacturing process shown in FIG. 3;
FIG. 13 is vertical cross-sectional view showing a multi-layer structure of the spacer shown in FIG. 4;
FIG. 14 is a top perspective view of the filter array shown in FIG. 1;
FIGS. 15A and 15B are cross-sectional views conceptually showing the configuration of the filter array shown in FIG. 14; and
FIGS. 16A and 16B are views conceptually showing the stacking structure of the base layer with the filter layer shown in FIG. 14.

### DETAILED DESCRIPTION OF THE INVENTION

Hereinafter, preferred embodiments of the present invention are described in detail with reference to the accompanying drawings.

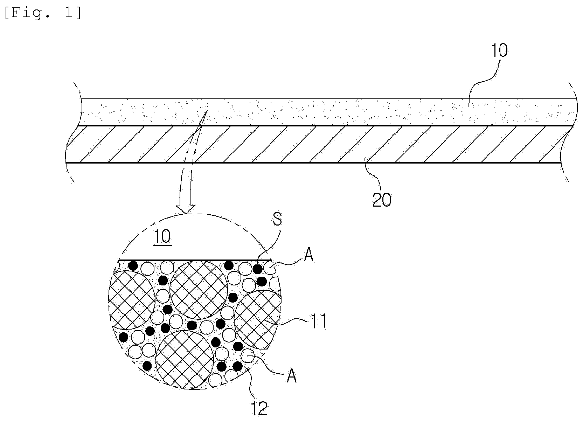

An absorbent for CRBN agents according to an embodiment of the present invention, as shown in FIG. 1, includes powder-typed activated carbon 11, a matrix 12, a solvent S, and a particulate filler A.

The matrix 12 is a thermosetting/thermoplastic gel or colloid mixed with the activated carbon 11 and solidifying from a liquid state and provides a sheet-shaped adsorption layer to be described below by solidifying. For example, the matrix 12 may be made of eco-friendly aqueous urethane that is attached well to a fiber because it is bonded well to a fiber even it hardens at a low temperature and that improves durability of an adsorption filter according to an embodiment of the present invention to be described below by providing elasticity and adsorption layer, or may be made of acryl or melanin resin, which has excellent moisture resistance, hardness, and formability or, epoxy, silicon, phenol, or polyamic acid, which have an adhesive property, strength, chemical resistance, and thermal resistance, or mixtures of them, depending on additionally required properties. The matrix 12 prevents flow of the activated carbon 11 by binding them in hardening. That is, the matrix 12 functions as a binder.

The activated carbon 11 is mixed in the matrix 12, as shown in FIG. 1, thereby sorbing toxic agents through pores (not shown). That is, the activated carbon 11 filters noxious chemical substances such as CBRN agents or chemical substances that are harmful to a human body, particularly, liquid or gaseous toxic agents by sorbing them. The activated carbon 11 is provided in a powder type to be easily mixed in the liquid matrix 12.

The activated carbon 11, for example, may be made from one of graphene, graphite, and metal oxides (Al203, Fe₂O₃, SiO₂, MgO, CaO, TiO2, ZnO, V₂O₅) or mixtures of two or more of them. The activated carbon 11 may contain Cu, Ag, Fe, and Ce to be able to selectively enhance an absorptive ability, depending on the types of toxic agents.

The activated carbon 11, as described above, can harden at a low speed and is excellent in ductility, so it is mixed in the matrix 12 made of at least one of urethane resin that is generally used for products requiring elasticity, acryl and melanin resin having excellent moisture resistance, hardness, and formability, and epoxy, silicon, phenol, and polyamic acid that have adhesive properties, strength, chemical resistance, and thermal resistance.

The activated carbon 11 may have granularity (grain size) of 0.1*µ*m to 300*µ*m. The smaller the grain size of the activated carbon 11, the larger the effective area for adsorption, so the smaller the grain size, the better it is. Coal-based activated carbon is preferable for the activated carbon 11 rather than coconut-based activated carbon. This is because when the activated carbon 11 is coconut-based activated carbon, it is vulnerable to thermal stress in heat treatment, so it is preferable to use coal-based activated carbon that is strong against thermal stress.

The solvent S, as shown in FIG. 1, is mixed in the matrix 12 and prevents the matrix 12 from too quickly hardening. The solvent S, for example, may be made from at least one substance that is compatible with other components and has properties appropriate to hardening and working conditions. The solvent S, as will be described below, may be made from a substance that is evaporated, or dried and dissipated by heat in heat treatment. Further, the solvent S may be made from a substance that is compatible with the matrix 12 and remains for a required time for workability. For example, the solvent S may be made from at least any one of alcohol, water, ethylene glycol, butyl carbitol, butyl cellosolve, and terpineol. That is, the solvent S may be made from one of or mixtures of these substances.

When the matrix 12 hardens, the solvent S evaporates or, dries and dissipates, thereby providing fine pores such as sweat pores in the matrix 12 that has hardened. Accordingly, the matrix 12 can supply toxic agents to the activated carbon 11 through the pores.

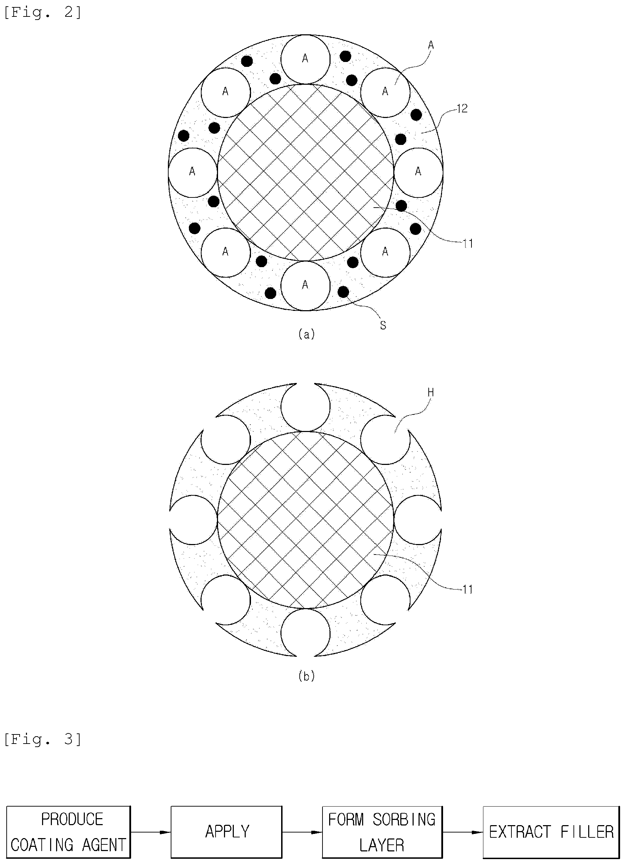

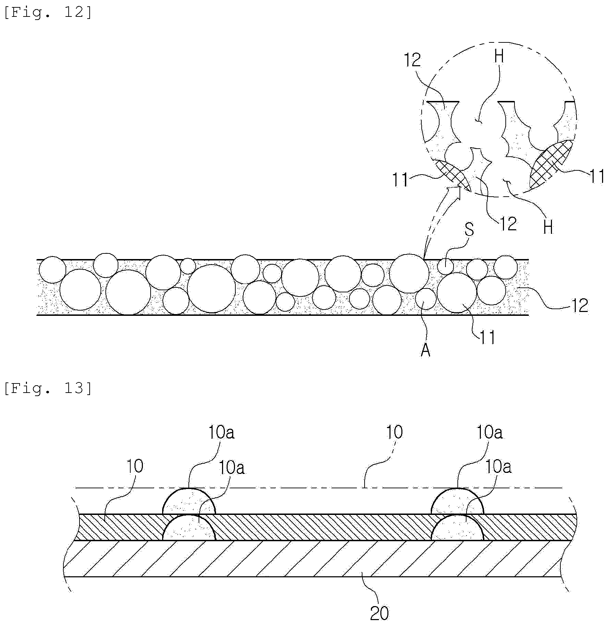

The particulate filler A is composed of many particles and, as shown in FIG. 1, it is mixed in the matrix 12 together with the activated carbon 11 and the solvent S. The particulate filler A may be made from a substance having excellent solubility to be easily mixed in the matrix 12. The particles of the particulate filler A are bonded to the particles of the activated carbon 11, as shown in FIG. 2A, and are extracted and removed from the matrix 12 after the matrix 12 hardens. In this process, the particles of the particulate filler A leave holes H that are bubble-shaped cavities on the outer sides of the particles of the activated carbon 11, as shown in FIG. 2A. That is, the holes H provide fine bubble-shaped cavities in the matrix 12 which are formed by the spaces left after the particles of the particulate filler A are removed, as shown in FIG. 12, and the fine holes provide passages for guiding a toxic agent on the particles of the activated carbon 11. Accordingly, the sorbing areas, which come in contact with a toxic agent, that is, specific surface areas (exposed areas) of the particles of the activated carbon 11 are increased by the holes H even though the activated carbon 11 is mixed in the matrix 12, so the absorptive ability is improved.

The particulate filler A is a liquid or a liquefied gas having a grain size substantially the same as or different from (larger or smaller than) that of the solvent S. The particulate filler A can be extracted from the matrix by evaporating or, drying and dissipating when the matrix 12 hardens, similar to the solvent S. Unlikely, the particulate filler A may be extracted from the matrix 12 by coming in contact with a specific extraction solvent, that is, a reagent, and chemically reacting on the reagent. The particulate filler A may be, for example, at least any one of ammonia, Freon, chlorine, nitrogen, and carbon dioxide. That is, the particulate filler A may be a liquid and/or gaseous substance.

The holes H are cavities formed by the particles of the particulate filler A, so they have a size that prevents water from passing, but allows gas such as air to pass through the matrix 12. Accordingly, the holes H substantially guide a gaseous toxic agent to the particles of activated carbon 11. However, the holes H can guide even a liquid toxic agent in a vapor type to the particles of the activated carbon 11.

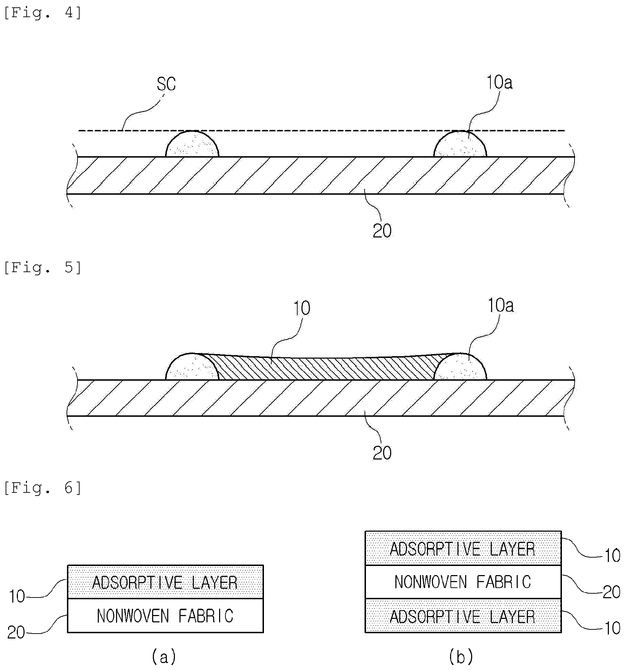

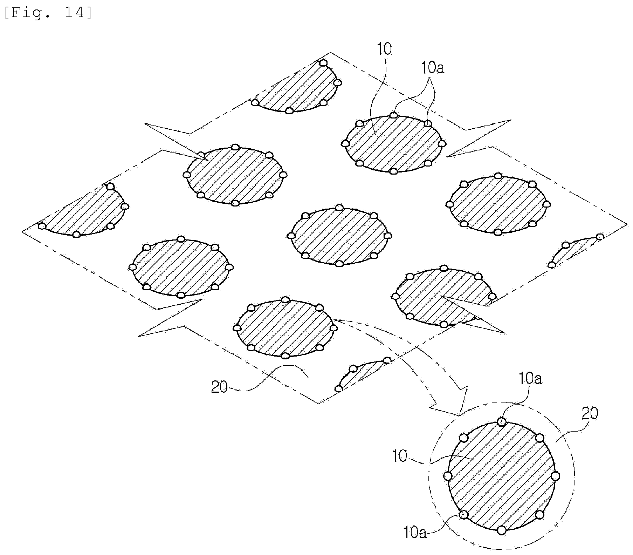

As a result, the particulate filler A is a substance composed of particles having a size that can provide fine holes allowing only air to pass therethrough, thereby providing fine holes in the matrix 12 when removed from the matrix 12 that has hardened. When the matrix 12 may be provided in a coated sheet type, as shown in FIGS. 5 and 14, by printing, it is provided with air permeability by the fine pores and cavities (fine holes) formed by the particulate filler A and the solvent S.

When the particulate filler A is not mixed in the matrix 12, the outer sides of the particles of the activated carbon 11 are covered by the matrix 12, and only partially exposed by the pores formed by the solvent S. However, when the particulate filler A is mixed in the matrix 12 and then removed, the holes H are formed on the outer sides of the particles of the activated carbon 11, as shown in FIG. 12, so the exposed areas of the outer sides are increased as compared with the case when only the solvent S is mixed. Accordingly, it is very preferable to mix the particulate filler A in the matrix 12 in order to improve the sorbing ability of the activated carbon 11.

On the other hand, in the absorbent according to the present invention, the matrix 12 is mixed at 24 to 75 parts by weight for 100 parts by weight of the activated carbon 11. The solvent S is mixed at 106 to 205 parts by weight for 100 parts by weight of the activated carbon 11. The particulate filler A is mixed at 0.2 to 57 parts by weight for 100 parts by weight of the activated carbon 11. To this end, the absorbent is produced by mixing the activated carbon of about 5 to 70wt%, the matrix 12 of about 5 to 30wt%, the particulate filler A of about 0.1 to 20wt%, and the balance is the solvent S. The solvent S may be about 37 to 72wt%.

When the content of the activated carbon 11 is less than 5wt%, it is difficult to expect the desired adsorptive capacity, and when it exceeds 70wt%, the printability is deteriorated and durability against washing is also deteriorated. When the content of the matrix 12 is less than 5wt%, a bonding ability to the textile is reduced, which causes a problem with durability during washing. Further, when the content exceeds 30wt%, it influences the specific surface areas and the active sites of the particles of the activated carbon 11, so the sorbing ability is reduced. Accordingly, it is preferable to mix the matrix 12 at 5 to 30wt%. When the content of the particulate filler A is less than 0.1wt%, desired holes H cannot be expected, and when it exceeds 20wt%, the viscosity of the matrix 12 is increased, so the printability may be deteriorated. When the content of the solvent S is less than 37wt%, it makes hardening of the matrix 12 to too fast, and when it exceeds 72wt%, it makes hardening of the matrix 12 too slow.

An additive for adjusting fluidity of the matrix 12 may be further added to the absorbent, if necessary. The additive may be a surfactant (containing negative, positive, and neutral ions). The additive improves printability of a coating agent made on the absorbent in an ink type and adjusts properties such as distribution characteristic and stability. In particular, the additive provides stability in maintaining, smooth workability and printability in coating or printing, and makes the surface properties of a print uniform by improving distribution characteristic of the activated carbon 11 and the viscosity and fluidity of the matrix 12.

The content of the additive may be about 0.035 to 17.5wt% to be 0.1 to 50wt% to the activated carbon 11 of 100wt%. When the content of the additive is less than 0.035wt%, the thixotropy of the coating agent is increased and smooth printing is impossible, and when it exceeds 17.5wt%, the thixotropy is decreased, so workability is deteriorated and the outer sides of the particles of the activated carbon 11 are covered by the matrix, which deteriorates the absorptive ability.

To produce the absorbent having this configuration according to an embodiment of the present invention, the solvent S, activated carbon 11, and particulate filler A are put into the matrix 12 and then stirred to be mixed, thereby producing a liquid coating agent in a gel or colloid type. The additive may be added and mixed in the absorbent.

The coating agent, as shown in FIG. 1, is applied to a base layer 20 and then hardened, thereby providing a filter layer 10 for sorbing a toxic agent. That is, since the activated carbon 11 is contained in the coating agent, the filter layer 10 becomes a sheet-shaped absorptive layer on the base layer 20. The filter layer 10 limitatively passes only purified air by sorbing a toxic agent through the holes H, pores, and activated carbon 11. Accordingly, the base layer 20 provides an adsorption filter to which the filter layer 10 that is a thick layer is integrally attached. That is, the adsorption filter is the base layer 20 having the filter layer 10.

The base layer 20 may be a textile made of a porous material or a water or oil repellent material. The base layer 20 may be, for example, a fabric, a leather, a synthetic fiber, a sponge, a nonwoven fabric, a film, or a membrane having many pores, or a mesh textile. In particular, it is preferable that the base layer 20 is a porous and light nonwoven fabric.

The filter layer 10 may be disposed on one side or both sides of the base layer 20 to filter a toxic agent, depending on the required absorptive ability, as shown in FIG. 3. When a common absorptive ability is required, the filter layer 10 is provided on one side of the base layer 20, as shown in FIG. 6A, but when a stronger absorptive ability is required, the filter layer 10 may be provided on both sides of the base layer 20, as shown in FIG. 6B. When the filter layer 10 is disposed on both sides of the baser layer 20, it is possible to filter a toxic agent through two steps.

When the filer layer 10 comes in contact with a reagent, as described above, the articles of the particulate filler A is removed and the holes H are formed. Further, when the solvent S is evaporated or, dried and dissipated by heat treatment to be described below, the pores (not shown) are formed in the filter layer 10. The pores and holes H are formed in sizes that pass gas to the base layer 20, but prevent permeation of water or moisture. When a gaseous toxic agent flows into the pores and holes H, it is filtered through the activated carbon 11 in the matrix 12 of the filter layer 10. However, the activated carbon 11 can filter a liquefied toxic agent such as a vapor by sorbing it, even if the toxic agent flows into the filter layer 10.

The filter layer 10 is, as shown in FIG. 1, is formed in a thin sheet shape and the matrix 12 is made of a substance urethane, silicon, or resin, so the filter layer 10 has flexibility and elasticity.

Since a coating agent that is the absorbent described above is applied to the base layer 20, printed in a thick layer, and then hardened by heat treatment, the filter layer 10 is formed in a sheet shape on the base layer 20.

The filter layer 10 is formed with a thickness of about 2*µ*m to 100*µ*m on the base layer 20, for example, by screen printing or gravure printing. The thickness depends on the printing characteristic and the required sorbing ability. For example, the filter layer 10 can be printed with a thickness of about 5∼100*µ*m by screen printing and a thickness of about 0.5∼5*µ*m by gravure printing.

As for the screen printing, for example, as shown in FIG. 5, the filter layer 10 can be printed on the base layer 10 at pressure of 3bar, a printing speed of 100mm/s, a squeegee hardness of 80d, a squeegee angle of 75°, a gap of 3mm between a mask and a substrate, using a poly-100 mesh screen (mask, not shown) that can print at a thickness of 100*µ*m. To this end, the screen is placed over (to face) the base layer 20 with a predetermined gap and then a liquid coating agent is applied on the screen. Thereafter, the coating agent is pressed and spread over the screen by a squeegee, whereby the coating agent is transcribed down on the base layer 20 through the meshes of the screen. Accordingly, the filter layer 10 is printed in a coated film type on the base layer 20.

On the other hand, as for the gravure printing, the filter layer 10 is printed in a thick layer on the base layer 20 from the printing surface of a gravure printing plate (not shown) having a plurality of grooves on a side. To this end, the coating agent is applied to the printing surface of the gravure printing plate, the gravure printing plate is set over the base layer 20 and then pressed onto baser layer 20, whereby the coating agent is transcribed on the baser layer 20. Accordingly, the filter layer 10 is printed in a coated film type on the base layer 20.

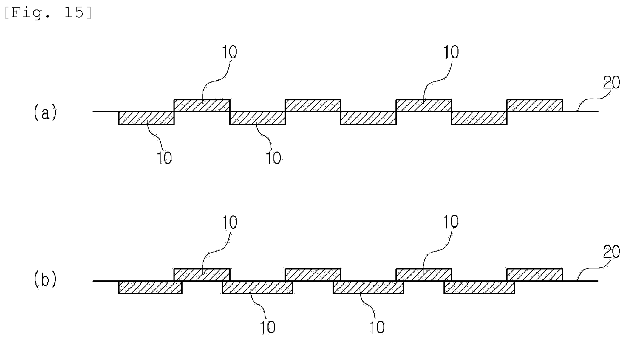

A plurality of filter layers 10 can be densely printed on the baser layer 20 with a gap therebetween in the shape of dots, lattices, or diagonal lines. that is, the filter layer 10 can be partially printed on the base layer 20. In particular, when the filter layers 10 are printed on both sides of the base layer 20, they may be alternately printed on both sides, as shown in FIGS. 15A and 15B. In order to substantially completely filter air passing through the base layer 20, the filter layers 10 may be printed on both sides of the baser layer 20 with their edges aligned up and down each other, as shown in FIG. 15A, or may be printed on both sides such that the filter layers on any one of both sides are slightly larger than those on the other side to partially overlap at the edges, as shown in FIG. 15B. As the filter layers 10 are printed alternately up and down on both sides of the baser layer 20, a toxic agent infiltrating through the gaps on one side is filtered by the filter layers on the other side of the base layer 20, so the toxic agent can be substantially completely filtered.

The filter layer 10 may be printed in a thick layer by applying a coating agent to a side of the base layer 20 using a common printer such as an inkjet printer or a 3D printer (not shown) that can print on a fiber textile or a film. In this case, the filter layer 10 is quickly and precisely printed.

The filter layer 10 may be, as shown in FIG. 4, printed on the base layer 20 with spacers 10a on the base layer 20. The spacers 10a, as shown in the figure, are projections formed on the base layer 20 before the coating agent, that is, the filter layer 10 is printed. The spacers 10a are spaced from each other on the baser layer 20, as shown in the figure.

The spacers 10a, as shown in the figure, space a screen SC, which is placed on the baser layer 20, from the surface of the baser layer 20. The spacers 10a allow the coating agent pressed down through the screen SC in the method described above to be printed in the shape shown in FIG. 5. That is, the gaps between the spacers 10a are filled with the coating agent. Accordingly, the thickness of the printed coating agent is determined by the height of the spacers 10a.

As a result, the spacers 10a are components for increasing the thickness of the filter layer 10. In detail, according to the screen printing, the layer that is printed on the base layer 20 is limited by the characteristics of the screen SC. However, when the spacers 10a are formed, the coating layer transcribed through the screen SC can be increased. Accordingly, when the thickness of a printed layer is increased by the spacers 10a, the filter layer 10 can be formed thicker on the base layer 20. Accordingly, the filter layer 10 can contain more activated carbon 11, particulate filler A, and solution S, so the sorbing ability can be improved. That is, since the filter layer 10 is provided with more particles of activated carbon 11, holes H, and pores, the entire specific surface area of the adsorption filter is increased, so it is possible to more smoothly filter toxic agents.

The coating agent may be filled in the gaps between the spacers by the printers described above instead of the screen SC. Accordingly, the filter layer 10 is quickly and precisely printed in a thick layer on the base layer 20.

On the other hand, the spacers 10a are made of a phase change material that solidifies from a liquid state. The spacers 10a, for example, may be made of the coating agent, liquid urethane, epoxy, nylon, acryl, or colloid or paste type activated carbon. The spacers 10a are applied to the base layer 20 at a height corresponding to a desired thickness of the filter layer 20 and spaced from each other, so they are protrude on the base layer. The spacers 10a may be applied in the shape of dots or mesh on the base layer, whereby they can be spaced from each other. The spacers 10a adhere to the surface of the base layer 20 by being hardened by drying or heating.

Further, the filter layer 10 formed by the spacers 10a may be composed of multiple layers, unlike the figures. In this case, a filter layer 10 may be printed on the base layer 20 by the printing method using the spacers 10a and then another filter layer 10 may be printed thereon in the same method, so multiple filter layers can be formed. That is, spacers 10a are formed and then a primary filter layer 10 is formed on the base layer 20, and spacers 10a and a second filter layer 10 are sequentially formed on the primary filter layer 10, thereby forming multiple filter layers 10. Accordingly, the filter layer 10 has multilayered structure, so the thickness can be further increased, and accordingly, the content of the activated carbon 11 is also increased. Accordingly, as the thickness of the filter layer 10 is increased, infiltration of a toxic agent is delayed, so the sorbing ability is considerably improved.

For example, when the filter layer 10 is formed in one layer with a thickness of about 30*µ*m, it shows a sorbing ability of about 200mm²/g, but when it is formed in three layers having the same thickness of about 30*µ*m, the entire thickness is increased three times, so the sorbing ability is also increased three times to about 600mm²/g. Accordingly, the filter layer 10 may be formed in a single layer or a plurality of layers, depending on the required sorbing ability.

As a result, the filter layer 10 can be substantially increased in thickness by being formed in a plurality of layers by the spacers 10a, and the sorbing ability can be considerably enhanced by the increase in thickness.

On the other hand, when the filter layer 10 printed on the base layer 20, as described above, is heated at about 80 to 200 , particularly, 120 to 180 for about 2 to 25 minutes, particularly, 4 to 15 minutes, it is hardened on the base layer 20 and adheres to the surface of the base layer 20. The solvent S is evaporated or dissipated by the heat treatment.

The filter layer 10 is left and cooled at a room temperature after heated, as described above, whereby it stably adheres to the surface of the base layer 20. The filter layer 10 can be rapidly cooled by water or cold air, but it is preferable to slowly cool the filter layer using air at a room temperature, as described above, in consideration of stability of the structure and stable adherence. Accordingly, the filter layer 10 is substantially integrated with the base layer 20, thereby making one sheet of layer. That is, the filter layer 10 and the base layer 20 provide one sheet of adsorption filter.

On the other hand, the cooled filter layer 10 comes in contact with a reagent described above, so the particulate filler A of the absorbent is extracted are removed. The filter layer 10 comes in contact with a reagent (solvent) such as a deaerator or a defoamer that extracts ammonia, Freon, chlorine, nitrogen, or carbon dioxide described above by chemically reacting with them, whereby the particulate filter A is removed. To this end, the filter layer 10 may be dipped in to a liquid reagent or washed with the reagent. Accordingly, the particulate filler A is extracted by a reagent that recovers the particulate filler A, so the holes H are formed on the outer sides of the particles of the filter layer 10.

When the filter layer 10 is separated from the reagent and then dried, the reagent is removed. However, the reagent may be removed, for example, by washing with water, other than drying the filter layer 10.

On the other hand, the spacers 10a may be formed in multiple layers, as shown in FIG. 13. In this case, spacers 10a are, as shown in the figure, primarily formed with a gap therebetween on the base layer 20 and secondary spacers are formed with a predetermined gap therebetween on a filter layer 10 formed by filling and hardening a coating agent between the gaps through the printing process described above. Further, a coating agent is filled and hardened in the gaps of the spacers 10a secondarily formed on the filter layer 10. Accordingly, the filter layer 10 may become thicker, so the amount of activated carbon 10 is increased, thereby improving the sorbing ability. As described above, when the spacers 10a are formed in multiple layers and a coating layer is additionally filled, it is possible to easily increase the thickness of the filter layer 10 to a desired level.

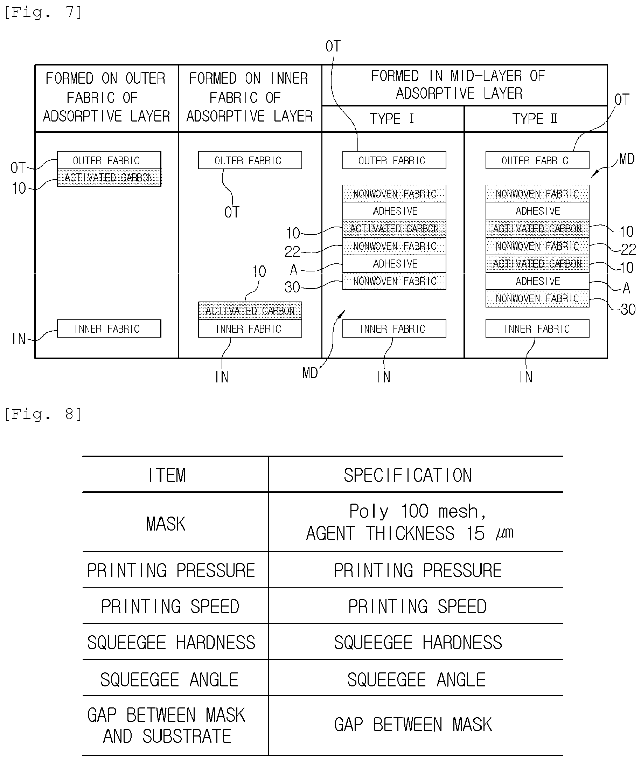

On the other hand, the base layer 20 may be used as the outer fabric OT of a protective suit against toxic agent such as a chemical protective suit, as shown in FIG. 7. That is, the filter layer 10 may be provided on an outer fabric OT, as shown in the figure. In this case, the filter layer 10, as shown in the figure, may be printed on the inside of the outer fabric OT to be integrated with the outer fabric. The outer fabric OT may be a textile through which air cannot easily infiltrate such as an aramid textile, but may be preferably a water and oil repellent and porous textile. For example, the outer fabric OT may be common Gore-Tex, or a film or a membrane made of PTFE (Polytetrafluoroethylene) having high chemical resistance and properties not changed at high temperature or EPTFE(Expanded polytetrafluoroethylene) having water, wind, and moisture resistance.

On other hand, the base layer 20 may be used as an inner fabric IN disposed inside the outer fabric, as shown in FIG. 7. That is, the filter layer 10 may be provided on the inner fabric IN, as shown in the figure. The inner fabric IN may be made of a non-porous material such as a film, but may be preferably made of a porous material such as nonwoven fabric that is generally used for a protective suit. The filter layer 10 may be provided on at least any one of both sides of the inner fabric, as shown in the figure, and particularly, it is preferable that the inner fabric IN is provided on a side facing the outer fabric OT. The inner fabric IN can filter a toxic agent infiltrating through the outer fabric OT by the filter layer 10.

Alternatively, the base layer 20 may be an extra layer 22 separate from the outer fabric OT or the inner fabric IN. The extra layer 22 may be provided as a mid-fabric MD between the outer fabric OT and the inner fabric IN, as shown in the figure. The extra layer 22 may be made of a non-porous material, as described above, but may be preferably made of a porous textile. A filter layer 10 may be provided on any one of both sides of the extra layer 22, as shown in the figure, to filter a toxic agent, but the filter layer 10 may be provided on both side to filter a toxic agent through multiple steps on both sides.

The outer side of the filter layer 10 of the mid-fabric MD or the outer side of the extra layer may be covered with an additional porous layer, as shown in FIG. 7. The additional layer 30 can be made of the same textile as the baser layer 20 or the extra layer 22 and can be attached to the filter layer 10 or the extra layer 20 through an adhesive layer A that is an adhesive, but it may be added on the extra layer 22 without bonding.

The additional layer 30 may be attached to both sides of the extra layer 22 having the filter layer 10, as shown in FIG. 7, or may be attached to only one side of the extra layer 22, depending on the required covering ability, that is, the ability to filter a toxic agent infiltrating through the filter layer 10. That is, one or a plurality of additional layers 30 may be attached to one side or both sides of the extra layer 22 having the filter layer 10, depending on the required absorptive ability. For example, when attached to both sides, the additional layer 30 can filter a toxic agent before fluid flows into the extra layer 22 after passing through the outer fabric OT or can filter again a toxic agent from fluid passing through the extra layer 22. Accordingly, the mid-fabric MD can filter a toxic agent in several steps through the extra layer 22 and the additional layer 30, so the sorbing ability is improved.

The additional layer 30, unlike the above description, may be spaced from the extra layer 22 having the filter layer 10. That is, the additional layer 30 may be provided separately from the extra layer 22. In this case, the extra layer 30 provides a space in which a toxic agent spreads between the additional layer 30 and the extra layer 22. Accordingly, the additional layer 30 can allow a gaseous toxic agent to spread through the space.

Further, a plurality of extra layers 22 each having a filter layer 10 may be provided and attached to each other, or may be attached with the additional layers 30 therebetween, or may be separately provided, and the additional layers 30 may be provided in the gaps.

As a result, an adsorption filter composed of the filter layer 10 and the base layer 20 according to an embodiment of the present invention can be used as the outer fabric, the inner fabric, or the mid-fabric, or the textiles of the fabrics of a protective suit against toxic agent such as chemical a protective suit. In other words, the adsorption filter can be used for protective suits against toxic agents.

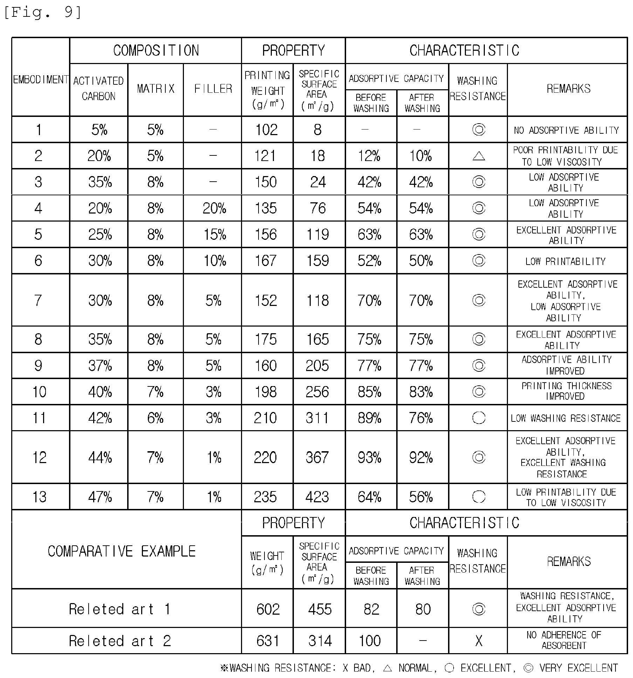

Test results for various protective suit textiles using the adsorption filter composed of the base layer 20 and the filter layer 10 are shown in FIG. 9, in which activated carbon, a binder, and a filler were mixed with a solvent that is the balance. Textiles having the adsorption filter according to an embodiment of the present invention were examined through first to fifteenth embodiments using adsorption filters having various composite ratios, and adsorptive capabilities before and after washing were measured. Further, a product for the related art1 (FIG. 9) employing activated carbon having bead-shaped particles described above in the related art and a product for the related art2 (FIG. 9) in which activated carbon powder is simply applied were examined as comparative examples. It was impossible to use actual chemical agents to the textiles, so the protective abilities of the textiles were evaluated in a liquid test method using similaragents having similar molecular structures and properties. For example, the similaragents were DMMP(Dimethyl methylphosphonate) including phosphorous that is a similar product by Soman(GD) and Thiophenol including sulfur that is a similar product by Mustard(HD). Further, the textiles (absorbent specimens) were exposed(ex: sprayed or depped) in the similaragents (liquid samples) for a predetermined time to absorb toxic agents and then the adsorptive abilities were measured at every hour. Further, the textiles were analyzed through GC/UV/Vis spectroscopy and then residual concentration was calculated by applying the analyzed data to a calibration curve, thereby obtaining the adsorptive capability (sorbing capability) of filter layers.

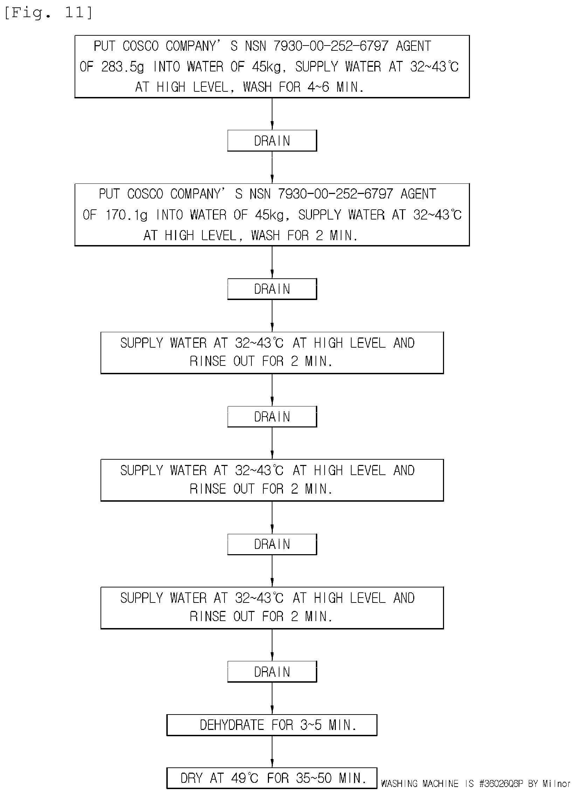

Washing abilities were examined, as shown in FIG. 11, by sufficiently putting a specific detergent in water at 32∼43 together with the textiles (to be washed), the textiles were washed for 4 to 6 minutes, were secondarily washed for 2 minutes in the same way, were primarily rinsed out in water at 32∼34 for 2 minutes, were secondarily and thirdly rinsed out in the same way, were dehydrated for 3 to 5 minutes, and were dried at 19 for 35 to 50 minutes. Thereafter, the adsorptive capacities were measured.

According to the test results, as shown in FIG. 9, as for the first embodiment, the washing resistance was excellent, but the amount of the activated carbon 11 was insufficient, so there was no adsorptive capability before and after washing and accordingly the adsorptive ability was zero. As for the second embodiment, printing was poor due to low viscosity, so the adsorption layer was not formed in a sufficient thickness and the washing resistance was also low. As for the third embodiment, the washing resistance was excellent, but holes H were not formed on the outer sides of the particles of the activated carbon 11, so the maximum specific surfaces areas of the particles of the activated carbon 11 were not obtained, and accordingly, the adsorptive ability was low. As for the fourth embodiment, the ratio of the activated carbon 11 to the matrix 12 was inappropriate, so the washing resistance was excellent, but the amount of the activated carbon 11 was insufficient, so the adsorptive ability was insufficient. As for the fifth and sixth embodiments, the content of the matrix 12 that determines washing resistance was sufficient, so the washing resistance was ensured, but the ratio between the activated carbon 11 and the particulate filler A was inappropriate, so printability was poor. The content of the matrix 12 that ensures washing resistance was fixed through the seventh to tenth embodiments and the printability and adsorptive ability were improved by changing the ratios of the activated carbon 11 and the particulate filler A. As for the eleventh and thirteenth embodiments in which the content of the matrix 12 was excessively reduced relative to the content of the activated carbon 11 in order to further ensure the adsorptive ability, the adsorptive capacities were improved, but the washing resistance was deteriorated. As for the twelfth embodiment, the mixing ratio of the activated carbon 11, the matrix 12, and the particulate filler A was appropriate, so the adsorptive capacities before and after washing satisfied the required adsorptive capacity. Further, in these embodiments, holes H were formed on the outer sides of the particles of the activated carbon 11 by extraction of the particulate filler A and the specific surface areas of the particles of the activated carbon 11 were maximally ensures, so the adsorptive abilities of the adsorption filters were further improved. Further, the thickness of filter layers 10 were increased by spacers 10a, so the content of the activated carbon 11 was naturally increased, and accordingly, the adsorptive abilities were further improved. Further, the adsorptive abilities were further enhanced when the filter layers 10 are formed in multiple layers.

In the twelfth embodiment, as show in FIG. 9, the specific surface area was smaller than that in the related art1 of the comparative examples, but the adsorptive ability was excellent. The reason is considered that, in the related art1, the beads of the activated carbon are formed a spherical shape, so the specific surface area is large, but a toxic agent passes by the outer sides of the beads of the activated carbon due to the characteristics of a sphere, so the adsorptive ability is low as compared with the specific surface area. However, it is considered, in the twelfth embodiment, that since a flat shape is used, it comes in direct contact with a toxic agent, so the specific surface area is small, but the adsorptive ability is excellent, as compared with the related art1.

However, it was found that, as for the related art2, the adsorptive capacity was excellent, but the activated carbon was fully removed in washing, so the adsorptive ability was lost.

Accordingly, it was found from the tests that the absorbents according to embodiments of the present invention and the adsorption filters using the adsorbents provide excellent adsorptive abilities, as compared with the comparative examples, when the activated carbon 11, the matrix 12, and the particulate filler A are mixed at the optimum ratio. Therefore, according to the absorbent having the above-mentioned configuration of the present invention and the adsorption filters using the adsorbent, the particles of the activated carbon 11 are uniformly distributed, so the adsorptive ability is improved and the activated carbon 11 is not removed in washing, so a contaminated textile can be reused after washing.

Further, since the absorbent is composed of the powder type activated carbon 11, the matrix 12, the solvent, and the particulate filler A and appropriate viscosity is correspondingly ensured, printing is easy and it is easy to fabricate a textile. Further, when the absorbent hardens in a sheet type, elasticity is ensured, so when it is used for the outer fabric OT or the inner fabric IN of a protective suit that is easily wrinkled, high wearing sensation and durability are provided and separation of the activated carbon 11 is almost permanently prevented.

Meanwhile, the filter layer 10 that is a coated sheet, as shown in FIG. 14, may be formed in a circular or an elliptical shape on the baser layer 20 or may be formed in polygonal shapes such as triangle, a rectangle, a pentagon, and a hexagon. The filter layer 10 can be formed in the shape described above, as shown in the figures, by spacing the spacers 10a in a circular shape and filling a coating agent in the gaps between the spacers 10a. A plurality of filters 10 are formed with regular intervals on the base layer 20, as shown in the figures. Accordingly, the filter layer 10 passes air through the gaps, that is, the base layer 20 at the gaps.

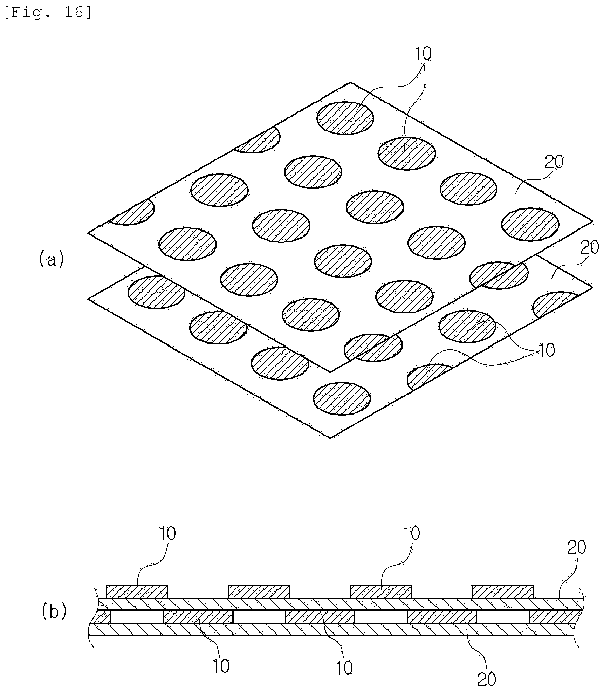

A plurality of base layers 20 having a filter layer 10 on a side is stacked, as shown in FIGS. 16A and 16B, to filter a toxic agent from air flowing through the gaps of the filter layers 10. The base layers 20 are stacked such that the filter layers 10 are alternately arranged, as shown in FIG. 16B. Accordingly, when air passing through an upper base layer 20 passes through the filer layer 10 on a lower base layer 20, a toxic agent is filtered. According to the stacked structure of the base layers 20, air flows through the gaps between the filter layers 10, so air permeability is improved in comparison to the case when the filter area 10 is provided on the entire surfaces. That is, the air permeability of the adsorption filter having this configuration is improved. Obviously, it is apparent that the adsorption filter can be used for the outer fabric OT, the inner fabric IN, or the mid-fabric MD.

The embodiments described above are just example of the present invention, so they do not limit the scope of the present invention and may be appropriately modified (in structure or configuration, or partially removed or supplemented) within the scope of the present invention, as long as they satisfy the essential features of the present invention. Further, some or many of the features of the embodiments described above may be combined. Therefore, the structures and configurations of the components in the embodiments of the present invention may be modified and combined, so those modifications and combinations of the structures and configurations should be construed as being included in claims of the present invention.

## Claims

1. An absorbent for CRBN (chemical, biological, radiological, and nuclear) agents, the absorbent comprising:
powder type activated carbon for sorbing a toxic agent;
a matrix made of a thermosetting and thermoplastic material that is mixed with the powder type activated carbon and solidifies from a liquid state;
a solvent mixed in the matrix mixed with the powder type activated carbon; and
a soluble particulate filler mixed in the matrix together with the solvent, composed of many particles bonding to particles of the powder type activated carbon, and providing holes formed by bubble-shaped cavities in the matrix by being extracted and removed when the matrix hardens.

2. The absorbent of claim 1, wherein the matrix is mixed at 24 to 75 parts by weight for 100 parts by weight of the powder type activated carbon, the solvent is mixed at 106 to 205 parts by weight for 100 parts by weight of the powder type activated carbon, and the soluble particulate filler is mixed at 0.2 to 57 parts by weight for 100 parts by weight of the powder type activated carbon.

3. The absorbent of claim 1, wherein the matrix is made of a material having at least any one of elasticity, hydrophilicity, chemical resistance, thermal resistance, and moisture resistance, and
the solvent is made of a material that is evaporated or, dried and dissipated by heating.

4. A toxic agent adsorption filter, comprising:
a base layer; and
a filter layer formed by the absorbent for CRBN agents of any one of claims 1 to 3 and providing a thick adsorptive layer by being applied to at least one side of the base layer to sorb a toxic agent.

5. The adsorption filter of claim 4, wherein the filter layer has holes having a size that makes the side of the baser layer waterproof and allows air to pass the filter layer.

6. The adsorption filter of claim 4, wherein a plurality of filter layers is spaced on the base layer.

7. A toxic agent protective suit manufactured using the adsorption filter of claim 4.

8. A method of manufacturing a toxic agent adsorption filter, the method comprising:
making a coating agent from the absorbent for CRBN agents of any one of claims 1 to 3;
printing a filter layer, which provides an adsorptive layer, in a thick layer on a base layer by applying the coating agent on a first side of the base layer;
forming the adsorptive layer in a sheet shape on the first side of the base layer by hardening the filter layer; and
forming holes that are bubble-shaped cavities by extracting a particulate filler composed of many particles from the absorbent forming the filter layer.

9. The method of claim 8, wherein the printing of a filter layer includes:
putting a screen on the base layer with a predetermined gap therebetween;
applying the coating agent made from the absorbent to the screen; and
transcribing the coating layer onto the base layer by pressing down the coating agent through the screen.

10. The method of claim 8, wherein the printing of a filter layer includes:
applying a coating agent to a printing surface of a gravure printing plate;
putting the gravure printing plate over the base layer; and
transcribing the coating agent on the printing surface onto the base layer by pressing the gravure plate to the base layer.

11. The method of claim 8, wherein the forming of the adsorptive layer includes:
solidifying the filter layer printed on the base layer in a sheet type by heating the filter layer; and
cooling the filter layer to a predetermined temperature.

12. The method of claim 8, wherein the forming of holes includes:
extracting the particulate filter from the filer layer using chemical reaction between the particulate filler and a reagent for extracting the particulate filler from the filter layer by bringing the filter layer in contact with the reagent; and
removing the reagent from the filter layer.

13. An adsorption filter for a toxic agent protective suit manufactured by the method of claim 8.
